# EUROPÄISCHE PATENTANMELDUNG

(11) **EP 1 772 199 A1**
(43) Veröffentlichungstag der Anmeldung: **11.04.2007**
(21) Anmeldenummer: 06020671.1
(22) Anmeldetag: 30.09.2006
(51) Int. Cl.: B07C 5/10, B21J 15/28, G01B 11/00, G06T 7/00, G01N 21/88

(54) **Verfahren zur Nieterkennung sowie Vorrichtung zur Durchführung des Verfahrens**

(30) Priorität: 08.10.2005 DE 102005048325
(71) Anmelder: EADS Deutschland GmbH, 85521 Ottobrunn (DE)
(72) Erfinder: Hader, Max, 86444 Affing (DE)

(57) **Zusammenfassung**

Die Erfindung betrifft ein Verfahren zur Nieterkennung an einer Nietmaschine, wobei durch Vergleich des an dem zu prüfenden Befestigungsmittel reflektierten Licht mit einem vorgegebenen Grenzwert ein zulässiger Niet (11) erkannt wird.

## Beschreibung

Die Erfindung betrifft ein Verfahren zur Nieterkennung sowie eine Vorrichtung zur Durchführung des Verfahrens, insbesondere für den Flugzeugbau.

Im Flugzeugbau werden zur Verbindung von Strukturelementen generell unterschiedliche Befestigungsmittel eingesetzt, die sich insbesondere in Material und Handhabung unterscheiden. Da sich einzelne dieser Befestigungsmittel in Form und Größe sehr ähnlich sind, ist es nicht völlig ausgeschlossen, dass z.B in eine Nietmaschine für die Verarbeitung von Al-Nieten eine nichtlösbare Schraubverbindung (High-Lock^{®}) aus Titan gelangt. Wird dies nicht bemerkt, so wird dieser mit hohem Druck gestaucht. Dabei kann das zu verbindende Bauteil erheblich beschädigt werden.

Es ist deshalb Aufgabe der Erfindung, ein Verfahren sowie eine Vorrichtung zu schaffen, mit dem ein für die Verarbeitung in der Nietmaschine vorgesehener Niet zuverlässig erkannt und der Nietzyklus gegebenenfalls unterbrochen werden kann.

Diese Aufgabe wird mit dem Verfahren nach Patentanspruch 1 gelöst. Eine Vorrichtung zur Durchführung des erfindungsgemäßen Verfahrens ist Gegenstand des Patentanspruchs 6. Eine besondere Verwendung des erfindungsgemäßen Verfahrens ist in Patentanspruch 5 angegeben.

Gemäß dem erfindungsgemäßen Verfahren wird ein zulässiger Niet anhand seines Reflexionsvermögens für Licht erkannt. Al-Nieten zum Beispiel sind mit einer Eloxierschicht als Oberflächenschutz beschichtet. Sie erscheinen deshalb in einer hell/glänzenden gelblichen Farbe. Dagegen sind die nicht als Nieten geeigneten nichtlösbaren Schraubverbindungen (High-Locks^{®}) eher dunkel in blauem Farbton. Befindet sich ein solch nicht zum Vernieten zulässiges Verbindungsmittel im Nietfinger der Nietmaschine, so wird es aufgrund seiner - verglichen mit den eher hellen Al-Nieten - geringeren Reflektivität erkannt. Der Wert der empfangenen Lichtmenge liegt dabei unter einer vorgegebenen Grenzwert, welcher entsprechend den Reflexionseigenschaften der relevanten Nieten bzw. Verbindungsmittel festgelegt wird.

Wird ein unzulässiges Befestigungsmittel im Nietfinger erkannt, wird ein Fehlersignal generiert, das z.B. auf dem Monitor des Bedieners der Nietmaschine angezeigt wird. Gleichzeitig wird der Nietzyklus aufgrund des Fehlersignals automatisch gestoppt.

Die Nieterkennung kann darüber hinaus mit der Ladezustandserkennung des Nietfingers kombiniert werden, d.h. es wird geprüft, ob sich überhaupt ein Befestigungsmittel im Nietfinger befindet. Hierzu wird eine handelsübliche Durchgangslichtschranke verwendet, bei der Lichtsender und Photodiode auf einer Linie liegen. Ein im Nietfinger vorhandenes Befestigungsmittel unterbricht den Lichtstrahl. Die erfindungsgemäße Nieterkennung erfolgt nur dann, wenn die Ladezustandserkennung den Zustand "Befestigungsmittel vorhanden" meldet.

Das erfindungsgemäße Verfahren kann aber auch oder zusätzlich zur Detektion solcher Nieten verwendet werden, die ihren Oberflächenschutz verloren haben und deshalb nicht mehr verarbeitet werden sollten. Derartige Nieten weisen gegenüber solchen Nieten mit intaktem Oberflächenschutz ebenfalls ein vermindertes Reflexionsvermögen auf, aufgrund dessen sie erkannt werden können.

In den bisher erläuterten Beispielen wiesen die zulässigen Nieten gegenüber den unzulässigen Befestigungsmitteln jeweils das höhere Reflexionsvermögen auf, so dass ihr Wert des reflektierten Lichts über dem voreingestellten Grenzwert lag. Natürlich sind auch Situationen denkbar, in denen die zulässigen Nieten ein verglichen mit den in Betracht zu ziehenden unzulässigen Befestigungsmitteln niedrigeres Reflexionsvermögen aufweisen. Auch in diesem Fall ist mittels der Erfindung selbstverständlich eine sichere Detektion möglich.

Mit dem erfindungsgemäßen Verfahren können die zu verbindenden Bauteile vor Beschädigung geschützt werden. Ausschuss, Bauabweichungen und Reparaturen werden vermieden.

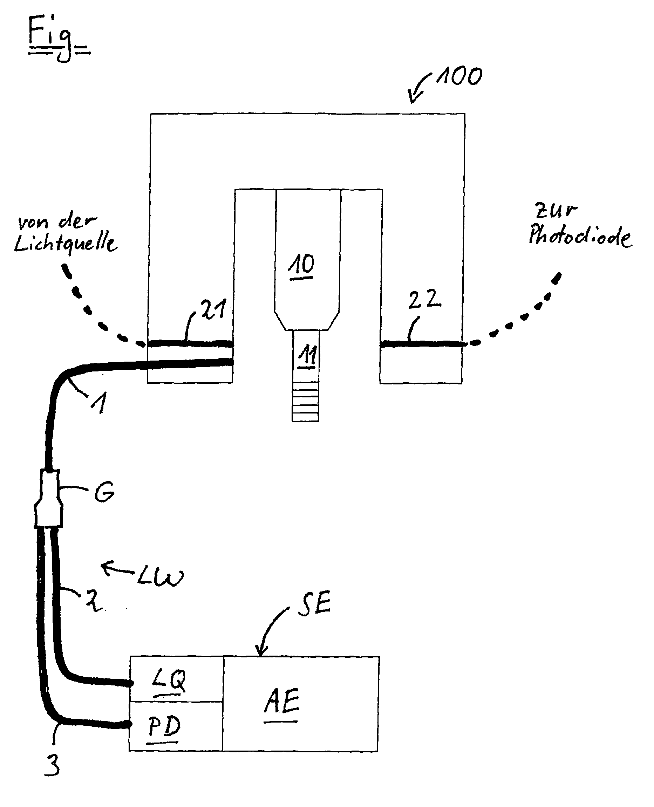

Die Erfindung wird anhand eines konkreten Ausführungsbeispiels unter Bezugnahme auf eine Fig. näher erläutert. Die Figur zeigt in schematischer Darstellung den Nietkopf einer Nietmaschine für den Flugzeugbau, an der eine Vorrichtung zur Durchführung des erfindungsgemäßen Verfahrens vorhanden ist.

An dem dargestellten Nietkopf 100 ist der zylindrische, bewegliche Nietfinger mit 10 bezeichnet. Dieser ist mit dem zu prüfenden Niet 11 bestückt. Gegenüber dem Niet 11 und auf gleicher Höhe mit diesem ist das Ende eines Lichtwellenleiters LW fixiert. Das andere Ende diese Lichtwellenleiters LW ist mit einer Sensoreinrichtung SE verbunden, die eine Lichtquelle LQ, einen Photodetektor PD sowie eine Auswerteeinheit AE umfasst. Bei dem Lichtleiter LW handelt es sich vorteilhaft um einen Gabel-Lichtwellenleiter. Er weist ein Gabelstück G auf, an der der nietseitige Lichtwellenleiter 1 in zwei Lichtwellenleiter 2,3 verzweigt. Dadurch wird das von der Lichtquelle LQ ausgehende Licht vollständig in den nietkopfseitigen Wellenleiter 1 ausgekoppelt. Umgekehrt wird das vom nietkopfseitigen Wellenleiter 1 an das Gabelstück gelangende Licht in den Wellenleiter 3 eingekoppelt, der mit der Photodiode PD verbunden ist.

Die von der Lichtquelle LQ ausgehende Strahlung trifft somit nach Durchlaufen der Wellenleiter 2 und 1 auf den Prüfling 11 und wird von diesem reflektiert. Das reflektierte Licht wird über die Wellenleiter 1 und 3 an die Photodiode PD geleitet. In der Auswerteeinheit AE im Sensor SE erfolgt ein Vergleich der reflektierten Energie mit einem voreingestellten Grenzwert zur Unterscheidung einer zulässigen Niete von einem unzulässigen sonstigen Befestigungsmittel. Der Grenzwert kann frei und stufenlos eingestellt werden. Das Ausgangssignal der Sensoreinrichtung wird an die Steuerung der Nietmaschine weitergeleitet, um den Nietzyklus bei erkanntem unzulässigem Verbindungsmittel zu unterbrechen. Der Bediener der Nietmaschine erhält einen entsprechenden Hinweis auf dem Bedien-Monitor und entfernt das unzulässige Befestigungsmittel.

Die Nieterkennung kann darüber hinaus mit der Ladezustandserkennung des Nietfingers kombiniert werden. Zur Feststellung, ob sich ein Befestigungsmittel im Nietfinger 10 befindet, wird eine Durchgangslichtschranke eingesetzt werden. Ein Ende des mit der Lichtquelle der Lichtschranke verbundenen Lichtleiters 21 sowie eine Ende des mit der Photodiode der Lichtschranke verbundenen Lichtleiters 22 liegen auf einer Linie, wobei der Lichtstrahl bei vorhandenem Befestigungsmittel 11 unterbrochen wird. Die Lichtschranke ist mit der Sensoreinrichtung SE gekoppelt, so dass die erfindungsgemäße Nieterkennung nur dann durchgeführt wird, wenn die Ladezustandserkennung den Zustand "Befestigungsmittel vorhanden" meldet.

## Patentansprüche

1. Verfahren zur Nieterkennung an einer Nietmaschine, **dadurch gekennzeichnet, dass** durch Vergleich des an dem zu prüfenden Befestigungsmittel (11) reflektierten Lichts mit einem vorgegebenen Grenzwert ein zulässiger Niet erkannt wird.

2. Verfahren zur Nieterkennung nach Anspruch 1, **dadurch gekennzeichnet, dass** bei Erkennen eines unzulässigen Befestigungsmittels ein Fehlersignal generiert wird.

3. Verfahren zur Nieterkennung nach Anspruch 1 oder 2, **dadurch gekennzeichnet, dass** bei Erkennung eines unzulässigen Befestigungsmittels der Nietzyklus der Nietmaschine gestoppt wird.

4. Verfahren zur Nieterkennung nach einem der vorangehenden Ansprüche, **dadurch gekennzeichnet, dass** es mit einem Verfahren zur Unterscheidung der Zustände "Befestigungsmittel vorhanden"/" Befestigungsmittel nicht vorhanden" gekoppelt ist, wobei die Prüfung auf zulässige Niete nur durchgeführt wird, solange der Zustand "Befestigungsmittel vorhanden" gesetzt ist.

5. Verwendung des Verfahrens nach einem der vorangehenden Ansprüche zur Erkennung des Oberflächenzustands eines Niets.

6. Vorrichtung zur Nieterkennung an einer Nietmaschine, mit folgenden Elementen:
- einer Lichtquelle (LQ) zur Aussendung von Licht auf das zu prüfende Befestigungsmittel (11) im Nietfinger (10) der Nietmaschine,
- einem Photodetektor (PD) zum Empfang des von dem zu prüfenden Befestigungsmittel (11) reflektierten Lichts,
- einer Auswerteeinheit (AE) zum Vergleich der im Photodetektor (PD) empfangenen Lichtmenge zu einem vorgegebenen Grenzwert, der geeignet ist, einen zulässigen Niet (11) von einem unzulässigen Befestigungsmittel zu unterscheiden und zur Generierung eines Fehlersignals, falls ein unzulässiges Befestigungsmittel erkannt ist.

7. Vorrichtung nach Anspruch 6, **dadurch gekennzeichnet, dass** das Lichts zu und von dem zu prüfenden Befestigungsmittel über Lichtwellenleiter (LW,1,2,3) geführt wird.

8. Vorrichtung nach Anspruch 7, **dadurch gekennzeichnet, dass** ein Gabel-Lichtwellenleiter (LW) eingesetzt wird.

9. Vorrichtung nach einem der vorangehenden Ansprüche 6 bis 8, **dadurch gekennzeichnet, dass** eine Durchgangslichtschranke vorhanden ist, zum Erkennen, ob sich ein Befestigungsmittel im Nietfinger (10) befindet.
